# EUROPEAN PATENT SPECIFICATION

(11) **EP 2 436 961 B1**
(45) Date of publication and mention of the grant of the patent: **30.09.2020**
(21) Application number: 10780533.5
(22) Date of filing: 25.05.2010
(51) Int. Cl.: F16K 31/126, F16K 7/17, F16K 17/28, H01M 8/04, F16K 15/14

(54) **VALVE, FLUID APPARATUS AND FLUID SUPPLY APPARATUS**
VENTIL, FLÜSSIGKEITSVORRICHTUNG UND FLÜSSIGKEITSZUFUHRVORRICHTUNG
SOUPAPE, APPAREIL À FLUIDE ET APPAREIL D'ALIMENTATION EN FLUIDE

(30) Priority: 25.05.2009 JP 2009125836
(43) Date of publication of application: 04.04.2012
(73) Proprietor: Murata Manufacturing Co., Ltd., Kyoto 617-8555 (JP)
(72) Inventor: MAEDA, Takenobu, Nagaokakyo-shi Kyoto 617-8555 (JP); KAMITANI, Gaku, Nagaokakyo-shi Kyoto 617-8555 (JP); SASAI, Hidekazu, Nagaokakyo-shi Kyoto 617-8555 (JP)
(74) Representative: Reeve, Nicholas Edward
(86) International application number: PCT/JP2010/058797
(87) International publication number: WO 2010/137578

(56) References cited:
- JP-A- 7 293 738
- JP-A- 10 325 474
- JP-A- 2003 167 635
- JP-A- 2006 077 823
- JP-A- 2008 218 056
- JP-U- 60 065 479
- US-A- 3 659 625
- US-A- 4 712 580
- US-A- 4 754 792
- US-A- 5 176 658
- US-A1- 2006 182 637

## Description

The present invention relates to valves and in particular to a valve for regulating fluid such as liquid fuel and to a fluidic apparatus and a fluid-supplying apparatus each including the valve.

In recent years, from the energy-saving and environmental points of view, researches and developments have been conducted about the introduction of fuel cell systems as power source units to electronic apparatuses such as mobile phones and personal computers. In such researches and developments, it is attempted to promote the supply of fuel by interposing a micropump between a fuel cartridge and a power-generating cell.

As such a micropump, International Publication No. WO-A-2008/007634 discloses a piezoelectric pump in which check valves for preventing the backward flow of fluid are provided at the inlet and the outlet, respectively. Depending on situations in driving a fuel cell system, however, the fluid pressure of the fluid flowing from the fuel cartridge into the piezoelectric pump may become high. This piezoelectric pump provided with the check valves can prevent the backward flow but cannot prevent the forward flow. Therefore, the piezoelectric pump has a problem in that, if the pressure at the inlet becomes high, an excessive amount of fuel may be supplied.

In this respect, a valve may be interposed between the fuel cartridge and the pump or on the downstream side of the pump. Known valves intended for such use include those of electromagnetic and piezoelectric types in which the valves are driven to be open and closed by active elements such as an electromagnetic coil and a piezoelectric element. For example, International Publication No. 2008/081767 discloses a valve including a piezoelectric element as a drive source. However, the active element is liable to fail. For example, in the case of the piezoelectric valve, there is a problem in that the piezoelectric element is difficult to handle and cracks and migration may occur.

Accordingly, we have appreciated that it would be desirable to provide a valve, a fluidic apparatus, and a fluid-supplying apparatus in which the valve is openable and closable without using any active element and the occurrence of excessive supply can be prevented.
US3659625 relates to a drain valve with a diaphragm-type valve for expelling contaminants from a fluid pressure storage reservoir. US2006/0182637 describes a technique for reducing the risk of free flow through a pump using a mechanical communication between a pressure difference and a flow restricting element. US5176658 relates to a check valve assembly wherein the valve means is activated by excess pressure.

### Summary of the Invention

The invention is defined in the independent claim.

Advantageous features are set out in the dependent claims.

A valve according to a first example of the present disclosure includes a valve body, a displacing member providing a valve chamber by being combined with the valve body, a first opening provided in the valve body and connected to a side from which fluid flows in, and a second opening provided in the valve body and connected to a side from which the fluid flows out. At least one of the first opening and the second opening is closed by the displacing member. When forces applied by the fluid to front and back surfaces, respectively, of the displacing member are made to differ from each other through the first opening, the displacing member is displaced and allows the first opening and the second opening to communicate with each other.

A valve according to a second embodiment of the present invention includes a valve body, defined by a stack, including a diaphragm that divides the valve body in such a manner as to provide a first valve chamber on a first side of the diaphragm and a second valve chamber on a second side of the diaphragm, a first opening that is provided in the first valve chamber and is configured to be connected to a side from which fluid flows in, a second opening that is provided in the first valve chamber and is configured to be connected to a side from which the fluid flows out, and a third opening extending from the first side of the diaphragm, through the diaphragm and communicating with the second valve chamber, and into which differentiated fluid is able to flow from a fluid source the same as that for the fluid flowing in through the first opening. At least one of the first opening and the second opening is closed by the displacing member. When a force applied by the fluid to a side of the diaphragm facing the first valve chamber and a force applied by the fluid to a side of the diaphragm facing the second valve chamber are made to differ from each other through the first opening and the third opening, the diaphragm is displaced and allows the first opening and the second opening to communicate with each other.

A fluidic apparatus according to a third example of the present disclosure includes a valve and differential-pressure-producing means. The valve includes a valve body, a displacing member providing a valve chamber by being combined with the valve body, a first opening provided in the valve body and connected to a side from which fluid flows in and to an outlet side of the differential-pressure-producing means, and a second opening provided in the valve body and connected to a side from which the fluid flows out. At least one of the first opening and the second opening is closed by the displacing member. When forces applied by the fluid to front and back surfaces, respectively, of the displacing member are made to differ from each other through the first opening, the displacing member is displaced and allows the first opening and the second opening to communicate with each other.

A fluidic apparatus according to a fourth example of the present disclosure includes a valve and differential-pressure-producing means. The valve includes a valve body, a displacing member that divides the valve body in such a manner as to provide a first valve chamber and a second valve chamber and is displaced under a pressure of fluid, a first opening that is provided in the first valve chamber and is connected to a side from which the fluid flows in and to an outlet side of the differential-pressure-producing means, the differential-pressure-producing means producing a pressure difference between the first valve chamber and the second valve chamber, a second opening that is provided in the portion of the valve body having the first valve chamber and is connected to a side from which the fluid flows out, and a third opening that is provided in a portion of the valve body having the second valve chamber and into which differentiated fluid flows from a fluid source the same as that for the fluid flowing in through the first opening. At least one of the first opening and the second opening is closed by the displacing member. When a force applied by the fluid to a side of the displacing member facing the first valve chamber and a force applied by the fluid to a side of the displacing member facing the second valve chamber are made to differ from each other through the first opening and the third opening, the displacing member is displaced and allows the first opening and the second opening to communicate with each other.

A fluid-supplying apparatus according to a fifth example of the present disclosure includes a fluid supply source, a valve, and differential-pressure-producing means. The valve includes a valve body, a displacing member that divides the valve body in such a manner as to provide a first valve chamber and a second valve chamber and is displaced under a pressure of fluid, a first opening that is provided in a portion of the valve body having the first valve chamber and is connected to a side from which the fluid flows in and to an outlet side of the differential-pressure-producing means, the differential-pressure-producing means producing a pressure difference between the first valve chamber and the second valve chamber, a second opening that is provided in the portion of the valve body having the first valve chamber and is connected to a side from which the fluid flows out, and a third opening that is provided in a portion of the valve body having the second valve chamber and into which differentiated fluid flows from a fluid source the same as that for the fluid flowing in through the first opening. At least one of the first opening and the second opening is closed by the displacing member. When a force applied by the fluid to a side of the displacing member facing the first valve chamber and a force applied by the fluid to a side of the displacing member facing the second valve chamber are made to differ from each other through the first opening and the third opening, the displacing member is displaced and allows the first opening and the second opening to communicate with each other.

The above valves each include the displacing member that is displaced when the pressure of the fluid flowing into the valve chamber is changed and the forces applied to the front and back surfaces thereof thus change. Therefore, the valve is openable and closable without any special active element of an electromagnetic type, a piezoelectric type, or any other type. Moreover, when not driven, at least one of the first opening and the second opening is closed by the displacing member. Furthermore, when the forces applied by the fluid to the front and back surfaces of the displacing member (the force applied to the side facing the first valve chamber and the force applied to the side facing the second valve chamber) are made to differ from each other by the differential-pressure-producing means or the like, the first opening and the second opening communicate with each other. Therefore, when not driven, even if the fluid pressure at the first opening increases, the fluid does not leak from the second opening and is prevented from being supplied excessively. In addition, since the pressure of the fluid is the drive source, neither electromagnetic coil nor piezoelectric element is necessary and failure that may occur in drive sources of these types does not occur, providing good reliability.

According to the present invention, the valve is openable and closable without using any active element, and the occurrence of excessive supply can be prevented. Brief Description of Drawings
Fig. 1 is a schematic diagram of a fluid-supplying apparatus including a passive valve according to a first example.
Fig. 2 is an exploded perspective view of the passive valve illustrated in Fig. 1.
Fig. 3 includes diagrams illustrating the principle of operation of the passive valve illustrated in Fig. 1.
Fig. 4 is a diagram illustrating the operation of the passive valve illustrated in Fig. 1.
Fig. 5 is a schematic diagram of a fluid-supplying apparatus including a passive valve according to a second embodiment, which embodiment represents the invention.
Fig. 6 is a diagram illustrating the operation of the passive valve illustrated in Fig. 5.
Fig. 7 includes sectional views illustrating modifications of the passive valve.
Fig. 8 includes a sectional view of a passive valve according to a third example and an enlarged view illustrating a part of the passive valve.
Fig. 9 is a sectional view of a passive valve according to a fourth example.
Fig. 10 is a sectional view illustrating a diaphragm included in the passive valve illustrated in Fig. 9.
Fig. 11 is a sectional view of a passive valve according to a fifth example.
Fig. 12 illustrates a passive valve according to a sixth example and includes part (A) that is a sectional view in an assembled state and part (B) that is a sectional view in a disassembled state.
Fig. 13 is a sectional view of a passive valve according to a seventh example.
Fig. 14 is a sectional view of a displacing member included in the passive valve illustrated in Fig. 13.
Fig. 15 includes sectional views illustrating modifications of the displacing member illustrated in Fig. 14.
Fig. 16 is a sectional view of a passive valve according to an eighth example.
Fig. 17 is a sectional view of a passive valve according to a ninth example.

### Description of Embodiments

Embodiments of the valve, fluidic apparatus, and fluid-supplying apparatus according to the present invention will now be described with reference to the accompanying drawings. Members and parts that are common to the drawings are denoted by the same reference numerals and redundant descriptions thereof are omitted.

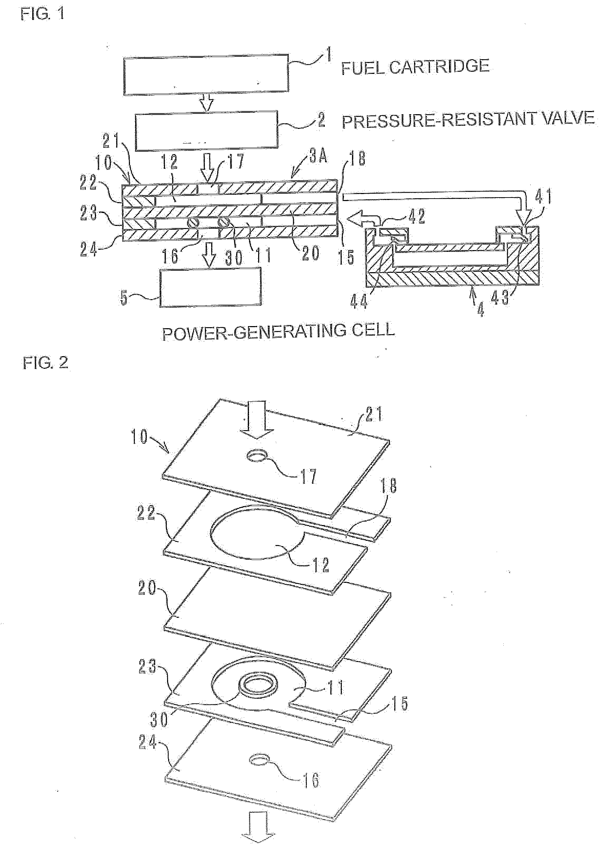

### (First Example: See Figs. 1 to 4)

Referring to Fig. 1, a fluid-supplying apparatus including a passive valve 3A according to a first example of the present disclosure basically includes a fuel cartridge 1, a pressure-resistant valve 2, the passive valve 3A, and a pump 4 as differential-pressure-producing means. Fuel (for example, methanol) stored in the fuel cartridge 1 is supplied from the passive valve 3A to a power-generating cell 5 through the pressure-resistant valve 2 and the pump 4.

The passive valve 3A includes a valve body 10, a diaphragm 20 that divides the inside of the valve body 10 into a first valve chamber 11 and a second valve chamber 12, a comparative inlet-side opening (third opening) 17 and a pump-inlet-side opening 18 provided to the second valve chamber 12, and a pump-outlet-side/valve-inlet-side opening (first opening) 15 and an output-side opening (second opening) 16 provided to the first valve chamber 11. The comparative inlet-side opening 17 is connected to the fuel cartridge 1 through the pressure-resistant valve 2. The pump-inlet-side opening 18 is connected to an inlet 41 of the pump 4. The pump-outlet-side/valve-inlet-side opening 15 is connected to an outlet 42 of the pump 4. The output-side opening 16 is connected to the power-generating cell 5.

The pump 4 is a commonly known product having check valves 43 and 44 at the inlet 41 and the outlet 42, respectively. The fuel cartridge 1, the pressure-resistant valve 2, and the power-generating cell 5 are also commonly known products and detailed descriptions thereof are omitted. The pressure-resistant valve 2 may not necessarily be provided.

Referring to Fig. 2, the valve body 10 is a stack including a top plate 21 having the opening 17, a plate member 22 having the second valve chamber 12 and the opening 18, the diaphragm 20, a plate member 23 having the first valve chamber 11 and the opening 15, and a bottom plate 24 having the opening 16. A seal member (O-ring) 30 is provided in the first valve chamber 11 and is bonded to the bottom plate 24.

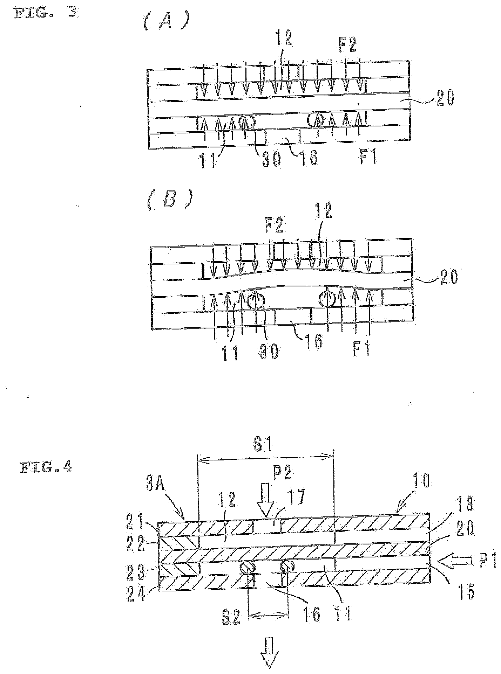

Now, the principle of operation of the passive valve 3A will be described with reference to Fig. 3. The force applied to the upper side of the diaphragm 20 by the fluid in the second valve chamber 12 is denoted by F2. The force applied to the lower side of the diaphragm 20 by the fluid in the first valve chamber 11 is denoted by F1. Forces F1 and F2 are each expressed as pressure-receiving area × fluid pressure. In the first valve chamber 11, the area of the seal member 30 is subtracted from the pressure-receiving area on the lower side of the diaphragm 20. That is, the pressure-receiving area on the side of the second valve chamber 12 is larger than the pressure-receiving area on the side of the first valve chamber 11. If force F2 is larger than force F1 (see Fig. 3(A)), the diaphragm 20 presses the seal member 30. Therefore, the opening 16 is closed to the first valve chamber 11. In contrast, if force F1 is larger than force F2 (see Fig. 3(B)), the diaphragm 20 is lifted up and the opening 16 is open to the first valve chamber 11.

Referring to Fig. 4, the above force relationship will be described more specifically, considering the relationship between the fluid pressures of the fuel cartridge 1 and the pump 4. Letting the pressure of the fluid flowing from the fuel cartridge 1 into the second valve chamber 12 be P2, the pressure of the fluid flowing from the pump 4 into the first valve chamber 11 be P1, the pressure-receiving area of the diaphragm 20 on the side of the valve chamber 12 be S1, and the area of the seal member 30 be S2, forces F2 and F1 applied to the upper and lower sides, respectively, of the diaphragm 20 are each expressed as pressure-receiving area × fluid pressure. Hence, the following relationship is established: force F2 applied to the upper side of the diaphragm 20 by the fluid in the second valve chamber 12 is expressed as area S1 × pressure P2, and force F1 applied to the lower side of the diaphragm 20 by the fluid in the first valve chamber 11 is expressed as (area S1 - S2) × pressure P1.

The fuel flows from the fuel cartridge 1 into the second valve chamber 12 and further into the inlet 41 of the pump 4. When the pump 4 is not driven, pressure P1 of the fluid flowing from the pump 4 is smaller than pressure P2 of the fluid flowing from the fuel cartridge 1 by an amount corresponding to the pressure loss caused by the pump 4, that is, pressure P2 > pressure P1. Hence, a relationship of force F2 > force F1 holds between the forces applied to the upper and lower sides of the diaphragm 20. Therefore, the opening 16 is closed, preventing the fuel from being supplied from the opening 16. When the pump 4 is driven and the fuel is supplied from the opening 15 into the first valve chamber 11, pressure P1 gradually increases and a relationship of force F2 < force F1 is established. Accordingly, the diaphragm 20 is displaced and the opening 16 is opened, whereby the fuel is supplied from the opening 16 to the power-generating cell 5.

Differential pressure ΔP of the fluid produced by driving the pump 4 is defined as pressure P1 - pressure P2. Even if differential pressure ΔP is zero, the pressure-receiving area for force F1 is smaller by an area approximately equal to S2, and the relationship of force F2 > force F1 holds. Therefore, the opening 16 is closed. This shows that the valve is highly reliable.

When the pressure in the fuel cartridge 1 increases because of a rise in the ambient temperature or the like, the fuel flows into the second valve chamber 12 and further into the pump 4. The pump 4 has the check valves 43 and 44 but cannot stop the forward flow. In such a case, in the passive valve 3A, even if pressure P2 in the second valve chamber 12 increases, pressure P2 simply acts as a pressure that presses the diaphragm 20 against the seal member 30, with the relationship of force F2 > force F1 maintained. Therefore, the opening 16 is maintained to be closed, preventing the occurrence of excessive supply.

Thus, a highly reliable valve is obtained even without using any active element. Furthermore, since a drive circuit, electrical power, and so forth necessary for a valve including an active element are not necessary, the system as a whole can save energy and the size thereof can be reduced.

Furthermore, although the differential-pressure-producing means according to the first example is a pump, the differential-pressure-producing means according to the present disclosure only needs to be an element that produces a pressure difference between the first valve chamber and the second valve chamber, i.e., a difference between pressures applied to the front and back surfaces of the displacing member (diaphragm), and is not limited to the pump.

If a pump is employed as the differential-pressure-producing means, the opening 16 can be easily opened and closed by driving the pump and thus adjusting pressures P1 and P2, realizing excellent responsiveness in the opening and closing of the opening 16. Furthermore, such a configuration is applicable to, for example, flammable fluid and the like and has no limitations on fluid properties, meaning excellent versatility. Furthermore, in the case where the differential-pressure-producing means provided to the valve is a pump, there may be provided a fluidic apparatus capable of ejecting a constant amount of fluid. For example, if the fuel cartridge is positioned at substantially the same level as the pump and the valve or at a level much higher than the pump and the valve, an additional pressure can be applied to the second valve chamber of the valve. This reduces the variation in the fluid pressure at the outlet-side opening of the valve. Accordingly, even if there are any changes in the pressure at the outlet and inlet sides of the pump because of any changes in the ambient environment, the variation in the flow rate is suppressed and a constant amount of fluid can be ejected.

The second valve chamber 12 may not necessarily be provided in the form of a chamber. The opening 18 illustrated in Fig. 2 may be widened so as to have a width the same as the diameter of the second valve chamber 12. In that case, however, the above-described relationships between pressures P1 and P2 and between forces F1 and F2 need to be maintained.

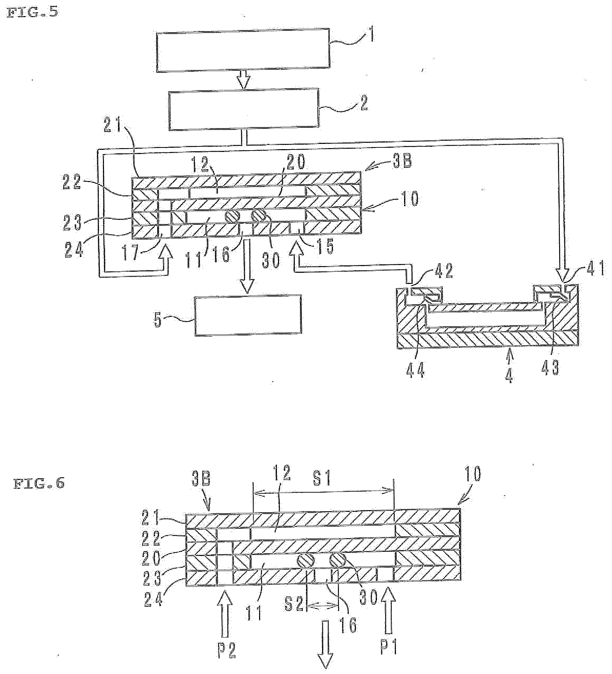

### (Second Embodiment: See Figs. 5 and 6)

A fluid-supplying apparatus including a passive valve 3B according to a second embodiment is illustrated in Fig. 5 and basically has the same configuration as that of the first example, except that the comparative inlet-side opening 17 connected to the fuel cartridge 1 through the pressure-resistant valve 2 and communicating with the second valve chamber 12 is provided on the lower side of the valve body 10, and that the fuel from the fuel cartridge 1 is directly connected to the inlet 41 of the pump 4 through the pressure-resistant valve 2. The opening 17 extends from the bottom plate 24 through the diaphragm 20 and communicates with the second valve chamber 12. The pump-outlet-side/valve-inlet-side opening 15 through which the outlet 42 of the pump 4 and the first valve chamber 11 communicate with each other is provided on the lower side of the valve body 10.

The principle of operation of the passive valve 3B according to the second embodiment is the same as that in the first example. That is, the fuel flows from the fuel cartridge 1 through the opening 17 into the second valve chamber 12 and further into the inlet 41 of the pump 4. When the pump 4 is not driven, pressure P2 > pressure P1. Hence, force F2 > force F1, and the opening 16 is therefore closed, preventing the fuel from being supplied from the opening 16. When the pump 4 is driven and the fuel is supplied from the opening 15 into the first valve chamber 11, pressure P1 increases and a relationship of force F2 < force F1 is established. This causes the diaphragm 20 to be displaced, and the opening 16 is opened. Thus, the fuel is supplied from the opening 16 to the power-generating cell 5.

If the pressure in the fuel cartridge 1 increases because of a rise in the ambient temperature or the like, the fuel flows into the second valve chamber 12 and into the pump 4. The pump 4 has the check valves 43 and 44 but cannot stop the forward flow. In such a case, in the passive valve 3B, even if pressure P2 in the second valve chamber 12 increases, pressure P2 simply acts as a pressure that presses the diaphragm 20 against the seal member 30, and the relationship of force F2 > force F1 is maintained. Therefore, the opening 16 is maintained to be closed, preventing the occurrence of excessive supply.

Here, the relationship between pressure P2 on the fuel-cartridge side and pressure P1 on the pump side in the passive valve 3B according to the second embodiment will be described with reference to Fig. 6. Exemplary materials and thicknesses of the individual members included in the valve body 10 are given below, which make the passive valve thin and compact. The top plate 21 and the bottom plate 24 are made of acrylic resin and each have a thickness of 3 mm. The plate members 22 and 23 are made of glass epoxy resin and each have a thickness of 1.6 mm. The diaphragm 20 is made of PET resin and has a thickness of 0.1 mm. The seal member 30 is made of NBR. The valve body 10 as a whole has a thickness of 9.3 mm and a plan-view size of 50 mm × 50 mm.

There were conducted measurements of pressures P1 and P2 at the time of opening of the passive valve 3B with the diameter of the diaphragm 20 being 30 mm, the diameter of the seal member 30 being 5.0 mm, the heights of the first valve chamber 11 and the second valve chamber 12 being each 1.6 mm, and the pump 4 being driven at 1 Hz and at 6 Vpp. The results showed that the relationship of force F2 < force F1 was satisfied with pressure P1 on the side of the pump 4 being 6.0 kPa and pressure P2 on the side of the fuel cartridge 1 being 5.0 kPa.

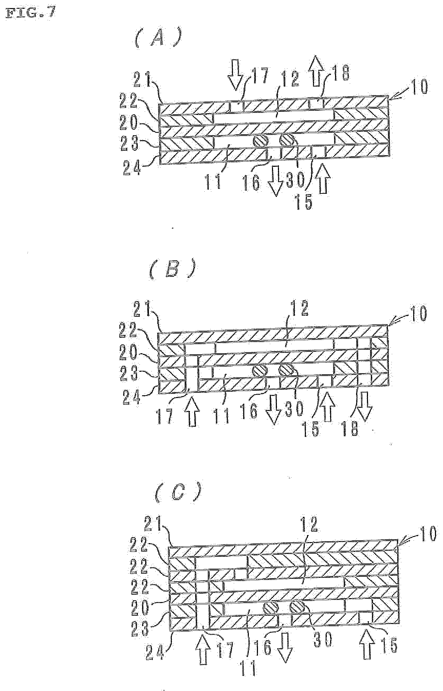

### (Modifications of Passive Valve: See Fig. 7)

Modifications of the passive valves 3A and 3B will now be described with reference to Fig. 7. Fig. 7(A) illustrates a first modification, which is a modification of the first example. In the first modification, the pump-inlet-side opening 18 is provided in the top plate 21, and the pump-outlet-side/valve-inlet-side opening 15 is provided in the bottom plate 24. Fig. 7(B) illustrates a second modification, which is a modification of the second embodiment. In the second modification, the pump-inlet-side opening 18 and the pump-outlet-side/valve-inlet-side opening 15 are provided in the bottom plate 24. Fig. 7(C) illustrates a third modification, which is another modification of the second embodiment. In the third modification, three plate members 22 are provided, and the fuel introduced from the comparative inlet-side opening 17 is supplied to the second valve chamber 12 from straight above. Furthermore, the pump-outlet-side/valve-inlet-side opening 15 is provided at a slightly outer position.

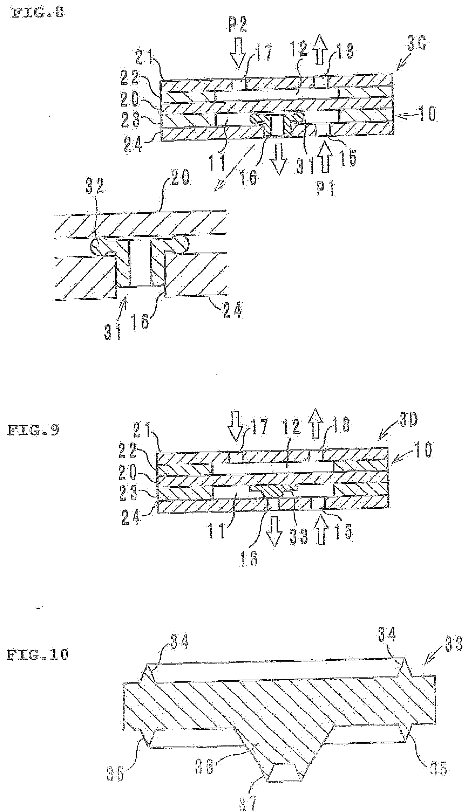

### (Third Example: See Fig. 8)

Fig. 8 illustrates a passive valve 3C according to a third example. The passive valve 3C has a smaller thickness and a smaller size and includes the top plate 21, the plate members 22 and 23, the diaphragm 20, and the bottom plate 24 that are all made of PET resin, and also includes a seal member 31 that is made of silicon rubber. The seal member 31, as illustrated in enlarged view, is a cylindrical body having a flange portion 32 swelling outward and is fitted in the opening 16 in such a manner as to be movable toward and away.

The principle of operation of the passive valve 3C according to the third example is the same as that in the first example. That is, the fuel flows from the fuel cartridge 1 through the opening 17 into the second valve chamber 12 and further into the inlet 41 of the pump 4. When the pump 4 is not driven, pressure P2 > pressure P1. Hence, the relationship of force F2 > force F1 is satisfied. In this state, since the flange portion 32 of the seal member 31 is in contact with the diaphragm 20, the opening 16 is closed, preventing the fuel from being supplied from the opening 16. When the pump 4 is driven and the fuel is supplied from the opening 15 into the first valve chamber 11, pressure P1 increases and a relationship of force F2 < force F1 is established. This causes the diaphragm 20 to be displaced toward the side from which the fuel flows in, producing a gap between the flange portion 32 and the diaphragm 20. Thus, the opening 16 is opened and the fuel is supplied from the opening 16 to the power-generating cell 5.

If the seal member 31 is employed as in the third example, the seal member does not need to be fixed with adhesive or the like, unlike the first example. Therefore, higher reliability is provided, free of problems such as the seal member being liable to come off.

### (Fourth Example: See Figs. 9 and 10)

Fig. 9 illustrates a passive valve 3D according to a fourth example. The passive valve 3D includes a seal member 33 illustrated in Fig. 10 in replacement of the seal member 31 included in the passive valve 3C according to the third example. The seal member 33 is made of silicon rubber and has ring-shaped projections 34 and 35 provided on the upper and lower sides, respectively, thereof. The projections 34 and 35 each have a triangular shape in sectional view. The seal member 33 also has a projection 36 on the lower side thereof. The projection 36 has a ring-shaped projection 37 having a triangular shape in sectional view. The projections 34, 35, and 37 are pressed against the diaphragm 20 and the bottom plate 24, whereby fuel leakage can be more assuredly prevented.

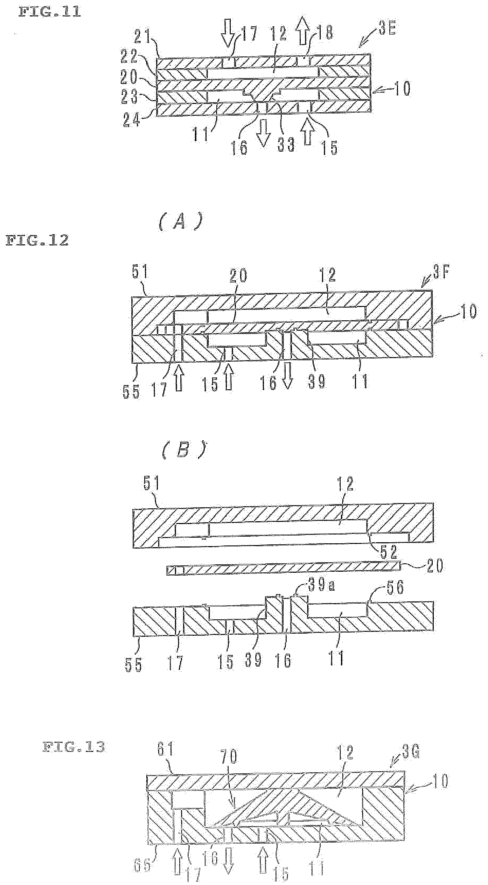

### (Fifth Example: See Fig. 11)

Fig. 11 illustrates a passive valve 3E according to a fifth example. The passive valve 3E includes the seal member 33, included in the passive valve 3D according to the fourth example, provided integrally with the diaphragm 20 (made of silicon rubber). Thus, the seal member 30 does not need to be fixed with adhesive or the like, unlike the first example. Therefore, higher reliability is provided, free of problems such as the seal member being liable to come off.

### (Sixth Example: See Fig. 12)

Fig. 12 illustrates a passive valve 3F according to a sixth example. The passive valve 3F includes the valve body 10 provided in the form of resin molds. The valve body 10 includes an upper body 51 and a lower body 55. The diaphragm 20 is sandwiched between the upper body 51 and the lower body 55. The second valve chamber 12 is provided in the upper body 51, and the first valve chamber 11 is provided in the lower body 55. The lower body 55 also has a seal member 39 provided integrally therewith.

The diaphragm 20 is made of a soft material and is pinched between microscopic projections 52 and 56 provided on the upper body 51 and the lower body 55, respectively, and with a microscopic projection 39a provided on the seal member 39 so that the diaphragm 20 does not become out of position.

### (Seventh Example: See Figs. 13 to 15)

Fig. 13 illustrates a passive valve 3G according to a seventh example. As in the sixth example, the passive valve 3G includes the valve body 10 provided in the form of resin molds (including an upper body 61 and a lower body 65). The passive valve 3G also includes a displacing member 70 having a substantially umbrella-like shape and made of, for example, silicon rubber. The displacing member 70 also functions as a seal member.

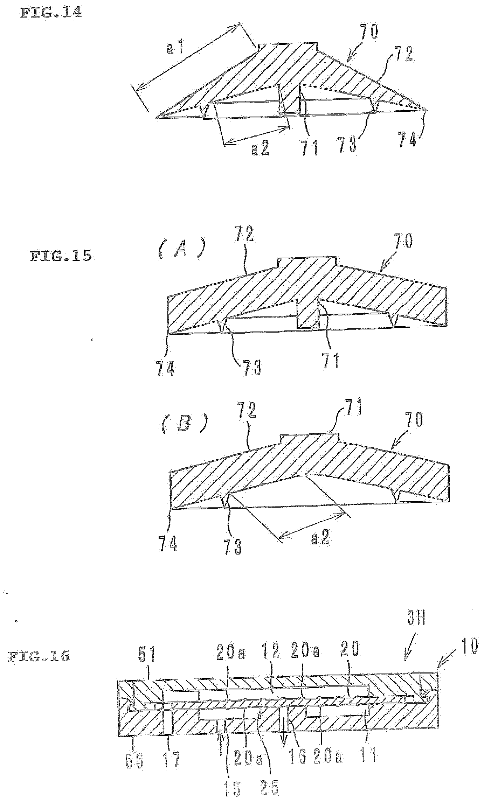

Referring to Fig. 14, the displacing member 70 includes a support portion 71 and an umbrella-shaped flexible portion 72 sloping with respect to the axis of the support portion 71. The umbrella-shaped flexible portion 72 has a ring-shaped projection 73 having a triangular shape in sectional view. The output-side opening 16 is positioned between a tip 74 and the projection 73. The pump-outlet-side/valve-inlet-side opening 15 is positioned between the projection 73 and the support portion 71. The umbrella-shaped flexible portion 72 functions as an on-off valve. Pressure P2 on the side of the fuel cartridge 1 is applied to a portion of the umbrella-shaped flexible portion 72 defined by length a1 and presses the umbrella-shaped flexible portion 72 downward. Pressure P1 on the side of the pump 4 is applied to a portion of the umbrella-shaped flexible portion 72 defined by length a2 (a1 > a2) and extending from the support portion 71 to the projection 73 and presses the umbrella-shaped flexible portion 72 upward.

When the pump 4 is not driven, pressure P2 > pressure P1 and force F2 > force F1. Therefore, the opening 16 is closed, preventing the fuel from being supplied from the opening 16. When the pump 4 is driven and the fuel is supplied from the opening 15 into the first valve chamber 11, pressure P1 increases. When a relationship of force F2 < force F1 is established, the projection 73 moves away from the bottom surface of the first valve chamber 11, and the opening 16 is opened, whereby the fuel is supplied from the opening 16 to the power-generating cell 5. Even if the pressure in the fuel cartridge 1 increases because of a rise in the ambient temperature or the like and pressure P2 in the second valve chamber 12 increases, the relationship of force F2 > force F1 is maintained. Therefore, the opening 16 is maintained to be closed, preventing the occurrence of excessive supply.

The displacing member 70 may be replaced with a modification illustrated in Fig. 15. Fig. 15(A) illustrates a first modification in which the umbrella-shaped flexible portion 72 has a uniform thickness from the base to the tip thereof. Thus, the withstand pressure can be set to a large value, and the design for establishing the balance between forces F1 and F2 can be made easily. Fig. 15(B) illustrates a second modification in which a lower part of the support portion 71 is omitted. In this case, length a2 defining the portion receiving force F1 increases (while the relationship of a1 > a2 is maintained), and the opening 16 can be opened with a smaller differential force.

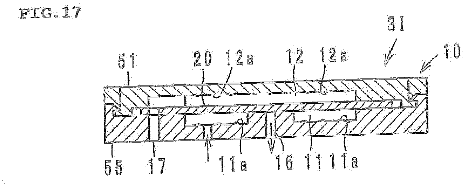

### (Eighth and Ninth Examples: See Figs. 16 and 17)

It is preferred that, when in operation, the diaphragm 20 be prevented from adhering to surfaces defining the valve-portion chambers 11 and 12 that face the diaphragm 20. Therefore, in a passive valve 3H according to an eighth example, microscopic irregularities 20a are provided on the upper and lower surfaces of the diaphragm 20 excluding a portion at which the second opening 16 is closed. In addition, in replacement of the seal member 30, a seat portion 25 is provided around the second opening 16.

In a passive valve 3I according to a ninth example, inner surfaces defining the respective first and second valve chambers 11 and 12 and facing the respective upper and lower surfaces of the diaphragm 20 each have microscopic irregularities 11a or 12a.

In the eighth and ninth examples, the valve body 10 includes the bodies 51 and 55 described in the sixth example (see Fig. 12).

### (Other Embodiments)

The valve, fluidic apparatus, and fluid-supplying apparatus according to the present disclosure are not limited to those of the above embodiments and may be modified in various ways within the scope thereof.

Particularly, the first valve chamber and the second valve chamber provided in the valve body may not necessarily be provided independently when the differential-pressure-producing means is not driven. For example, where the displacing member directly closes the second opening, the first valve chamber may be configured to appear when the differential-pressure-producing means is driven and the displacing member is displaced. In another example in which the displacing member directly closes the third opening provided in the top plate, the second valve chamber may be configured to appear when the differential-pressure-producing means is driven and the displacing member is displaced.

If the pressure is applied to the upper surface of the diaphragm synchronously with the pressure of the fluid flowing from the fuel cartridge, the first opening may be directly connected to the side from which the fluid flows in (for example, the outlet of the pump) without providing the second valve chamber and the third opening. When the pump is not driven, the second opening connected to the side from which the fluid flows out (for example, the power-generating cell) is closed by the diaphragm. In such a case, when the pump is not driven, the force applied to the diaphragm from the outer side of the valve chamber (essentially, the pressure applied synchronously with the fluid pressure from the fuel cartridge × the area of the valve chamber) is larger than the force applied from the inner side of the valve chamber. Therefore, the second opening is closed by the diaphragm. When the pump is driven, if the force applied to the diaphragm from the inner side of the valve chamber becomes larger than the force applied to the diaphragm from the outer side of the valve chamber, the diaphragm allows the first opening and the second opening to communicate with each other.

Accordingly, the valve may include a valve body, a displacing member providing a valve chamber by being combined with the valve body, a first opening provided in the valve body and connected to a side from which fluid flows in, and a second opening provided in the valve body and connected to a side from which the fluid flows out. The valve may be controlled such that at least one of the first opening and the second opening is closed by the displacing member, and such that, when forces applied by the fluid to front and back surfaces, respectively, of the displacing member are made to differ from each other through the first opening, the displacing member is displaced and allows the first opening and the second opening to communicate with each other.

Furthermore, the fluid is not limited to liquid fuel to be supplied to the power-generating cell and may be gas, as mentioned in the above embodiments.

### Industrial Applicability

As described above, the present invention is applicable to valves, fluidic apparatuses, and fluid-supplying apparatuses and is particularly superior in that the valve is openable and closable without using any active element and that the occurrence of excessive supply can be prevented.

### Reference Signs List

- 1: fuel cartridge
- 3A to 3I: passive valve
- 4: pump
- 5: power-generating cell
- 10: valve body
- 11: first valve chamber
- 11a, 12a: microscopic irregularities
- 12: second valve chamber
- 15: first opening
- 16: second opening
- 17: third opening
- 20: diaphragm
- 20a: microscopic irregularities
- 25: seat portion
- 30, 31, 33, 39: seal member
- 70: displacing member
- 71: support portion
- 72: umbrella-shaped flexible portion
- 73: projection

## Claims

1. A valve comprising:
a valve body (10) defined by a stack including a diaphragm (20) that divides the valve body (10) in such a manner as to provide a first valve chamber (11) on a first side of the diaphragm and a second valve chamber (12) on a second side of the diaphragm;
a first opening (15) provided in the first valve chamber (11) and configured to be connected to a side from which fluid flows in;
a second opening (16) provided in the first valve chamber (11) and configured to be connected to a side from which the fluid flows out; and
a third opening (17) extending from the first side of the diaphragm, through the diaphragm (20) and communicating with the second valve chamber (12), and into which differentiated fluid is able to flow from a fluid source the same as that for the fluid flowing in through the first opening,
wherein at least one of the first opening and the second opening is closed by the diaphragm, and
wherein, when a force applied by the fluid to a side of the diaphragm facing the first valve chamber and a force applied by the fluid to a side of the diaphragm facing the second valve chamber are made to differ from each other through the first opening and the third opening, the diaphragm is displaced and allows the first opening and the second opening to communicate with each other.

2. The valve according to Claim 1, wherein the area of a portion of the diaphragm (20) that is in contact with the fluid in the second valve chamber (12) is larger than the area of a portion of the diaphragm that is in contact with the fluid in the first valve chamber (11).

3. The valve according to any of Claims 1 to 2, wherein the first opening (15) is connectable to differential-pressure-producing means.

4. The valve according to Claim 3, wherein at least one of the first opening (15) and the second opening (16) is provided with a seal member (30), and the seal member and the diaphragm are in contact with each other when the differential-pressure-producing means is not driven.

5. The valve according to Claim 4, wherein the seal member (30) has a ring-like shape and is in line contact with the diaphragm.

6. The valve according to Claim 4, wherein the seal member (30) and the diaphragm (20) are provided as an integral body.

7. The valve according to Claim 3,
wherein the diaphragm includes a support portion (71) and an umbrella-shaped flexible portion (72) sloping with respect to the axis of the support portion, the umbrella-shaped flexible portion having a projection on a surface thereof facing the first and second openings, and
wherein the second opening is covered by the tip and the projection of the umbrella-shaped flexible portion when the differential-pressure-producing means is not driven.

8. The valve according to any of Claims 1 to 7, wherein irregularities are provided in surfaces of the diaphragm (20) excluding a seal portion and/or inner surfaces defining the first and second valve chambers, respectively, and facing the diaphragm.

9. A fluidic apparatus comprising a valve according to any of claims 1 to 8 and differential-pressure-producing means,
wherein the diaphragm (20) is displaced under a pressure of fluid; and
wherein the first opening of the valve is connected to an outlet side of the differential-pressure-producing means, the differential-pressure-producing means producing a pressure difference between the first valve chamber and the second valve chamber.

10. The fluidic apparatus according to Claim 9, wherein the differential-pressure-generating device is a micropump.

## Patentansprüche

1. Ventil, umfassend:
einen Ventilkörper (10), der durch einen Stapel mit einer Membran (20) definiert wird, die den Ventilkörper (10) so unterteilt, dass eine erste Ventilkammer (11) auf einer ersten Seite der Membran und eine zweite Ventilkammer (12) auf einer zweiten Seite der Membran bereitgestellt werden;
eine erste Öffnung (15), die in der ersten Ventilkammer (11) bereitgestellt ist und gestaltet ist, um mit einer Seite verbunden zu werden, von der Fluid einströmt;
eine zweite Öffnung (16), die in der ersten Ventilkammer (11) bereitgestellt ist und gestaltet ist, um mit einer Seite verbunden zu werden, von der das Fluid ausströmt; und
eine dritte Öffnung (17), die sich von der ersten Seite der Membran, durch die Membran (20) hindurch, erstreckt und mit der zweiten Ventilkammer (12) in Strömungsverbindung ist und in welche differenziertes Fluid aus einer Fluidquelle strömen kann, die die gleiche ist wie die für das Fluid, das durch die erste Öffnung einströmt,
wobei die erste Öffnung und/oder die zweite Öffnung von der Membran geschlossen wird und
wobei, wenn bewirkt wird, dass eine von dem Fluid auf eine Seite der Membran, die der ersten Ventilkammer zugekehrt ist, angewendete Kraft und eine von dem Fluid auf eine Seite der Membran, die der zweiten Ventilkammer zugekehrt ist, angewendete Kraft durch die erste Öffnung und die dritte Öffnung unterschiedlich sind, die Membran verlagert wird und ermöglicht, dass die erste Öffnung und die zweite Öffnung miteinander in Strömungsverbindung sind.

2. Ventil nach Anspruch 1, wobei die Fläche eines Teils der Membran (20), die mit dem Fluid in der zweiten Ventilkammer (12) in Kontakt ist, größer ist als die Fläche eines Teils der Membran, die mit dem Fluid in der ersten Ventilkammer (11) in Kontakt ist.

3. Ventil nach einem der Ansprüche 1 bis 2, wobei die erste Öffnung (15) mit einem Differenzdruck erzeugenden Mittel verbindbar ist.

4. Ventil nach Anspruch 3, wobei die erste Öffnung (15) und/oder die zweite Öffnung (16) mit einem Dichtungselement (30) versehen ist und das Dichtungselement und die Membran miteinander in Kontakt sind, wenn das Differenzdruck erzeugende Mittel nicht angetrieben wird.

5. Ventil nach Anspruch 4, wobei das Dichtungselement (30) eine ringähnliche Form hat und mit der Membran in Linienkontakt ist.

6. Ventil nach Anspruch 4, wobei das Dichtungselement (30) und die Membran (20) als einstückiger Körper bereitgestellt sind.

7. Ventil nach Anspruch 3, wobei die Membran einen Stützteil (71) und einen schirmförmigen flexiblen Teil (72) aufweist, der in Bezug auf die Achse des Stützteils abgeschrägt ist, wobei der schirmförmige flexible Teil einen Vorsprung an einer Oberfläche davon hat, die der ersten und der zweiten Öffnung zugekehrt ist, und
wobei die zweite Öffnung von der Spitze und dem Vorsprung des schirmförmigen flexiblen Teils bedeckt wird, wenn das Differenzdruck erzeugende Mittel nicht angetrieben wird.

8. Ventil nach einem der Ansprüche 1 bis 7, wobei in den Oberflächen der Membran (20) außer an einem Dichtungsteil und/oder Innenflächen, welche die erste bzw. die zweite Ventilkammer bilden und der Membran zugekehrt sind, Unebenheiten bereitgestellt sind.

9. Strömungsvorrichtung, umfassend ein Ventil nach einem der Ansprüche 1 bis 8 und ein Differenzdruck erzeugendes Mittel,
wobei die Membran (20) unter einem Fluiddruck verlagert wird; und
wobei die erste Öffnung des Ventils mit einer Auslassseite des Differenzdruck erzeugenden Mittels verbunden ist, wobei das Differenzdruck erzeugende Mittel eine Druckdifferenz zwischen der ersten Ventilkammer und der zweiten Ventilkammer erzeugt.

10. Strömungsvorrichtung nach Anspruch 9, wobei die Differenzdruck erzeugende Vorrichtung eine Mikropumpe ist.

## Revendications

1. Soupape comprenant :
un corps de soupape (10) défini par un empilage comprenant un diaphragme (20) qui divise le corps de soupape (10) de manière à fournir une première chambre de soupape (11) sur un premier côté du diaphragme et une deuxième chambre de soupape (12) sur un deuxième côté du diaphragme ;
une première ouverture (15) fournie dans la première chambre de soupape (11) et configurée pour être raccordée à un côté duquel un fluide coule dedans ;
une deuxième ouverture (16) fournie dans la première chambre de soupape (11) et configurée pour être raccordée à un côté duquel le fluide coule dehors ; et
une troisième ouverture (17) s'étendant du premier côté du diaphragme, à travers le diaphragme (20) et communiquant avec la deuxième chambre de soupape (12), et dans laquelle un fluide différencié est en mesure de couler d'une source de fluide la même que pour le fluide coulant à travers la première ouverture,
dans laquelle au moins l'une d'entre la première ouverture et la deuxième ouverture est fermée par le diaphragme, et
dans laquelle, lorsqu'une force appliquée par le fluide à un côté du diaphragme faisant face à la première chambre de soupape et qu'une force appliquée par le fluide à un côté du diaphragme faisant face à la deuxième chambre de soupape sont faites pour différer l'une de l'autre à travers la première ouverture et la troisième ouverture, le diaphragme est déplacé et permet à la première ouverture et à la deuxième ouverture de communiquer l'une avec l'autre.

2. Soupape selon la revendication 1, dans laquelle la surface d'une partie du diaphragme (20) qui est en contact avec le fluide dans la deuxième chambre de soupape (12) est plus grande que la surface d'une partie du diaphragme qui est en contact avec le fluide dans la première chambre de soupape (11).

3. Soupape selon l'une quelconque des revendications 1 à 2, dans laquelle la première ouverture (15) peut être raccordée à un moyen produisant une pression différentielle.

4. Soupape selon la revendication 3, dans laquelle au moins l'une d'entre la première ouverture (15) et la deuxième ouverture (16) est pourvue d'un membre d'étanchéité (30), et le membre d'étanchéité et le diaphragme sont en contact l'un avec l'autre lorsque le moyen produisant une pression différentielle n'est pas entraîné.

5. Soupape selon la revendication 4, dans lequel le membre d'étanchéité (30) a une forme en anneau et est en contact en ligne avec le diaphragme.

6. Soupape selon la revendication 4, dans laquelle le membre d'étanchéité (30) et le diaphragme (20) sont fournis en un corps intégral.

7. Soupape selon la revendication 3, dans laquelle le diaphragme comprend une partie d'appui (71) et une partie flexible en forme de parapluie (72) inclinée par rapport à l'axe de la partie d'appui, la partie flexible en forme de parapluie ayant une saillie sur une surface de celle-ci faisant face à la première et à la deuxième ouverture, et
dans laquelle la deuxième ouverture est couverte par la pointe et la saillie de la partie flexible en forme de parapluie lorsque le moyen produisant une pression différentielle n'est pas entraîné.

8. Soupape selon l'une quelconque des revendications 1 à 7, dans laquelle des irrégularités sont fournies dans les surfaces du diaphragme (20) à l'exclusion d'une partie d'étanchéité et/ou de surfaces intérieures définissant la première et la deuxième chambre de soupape, respectivement, et faisant face au diaphragme.

9. Appareil fluidique comprenant une soupape selon l'une quelconque des revendications 1 à 8 et un moyen produisant une pression différentielle,
dans lequel le diaphragme (20) est déplacé sous une pression de fluide ; et
dans lequel la première ouverture de la soupape est raccordée à un côté de sortie du moyen produisant une pression différentielle, le moyen produisant une pression différentielle produisant une différence de pression entre la première chambre de soupape et la deuxième chambre de soupape.

10. Appareil fluidique selon la revendication 9, dans lequel le dispositif générant une pression différentielle est une micropompe.
